# EUROPEAN PATENT APPLICATION

(11) **EP 1 950 415 A1**
(43) Date of publication of application: **30.07.2008**
(21) Application number: 06822089.6
(22) Date of filing: 24.10.2006
(51) Int. Cl.: F04B 17/04, F04B 35/04, H02K 33/02

(54) **MAGNETIC RECIPROCATING MOVING FLUID DEVICE**

(30) Priority: 28.10.2005 JP 2005315114
(71) Applicant: NITTO KOHKI CO., LTD., Ohta-ku, Tokyo 146-8555 (JP)
(72) Inventor: SAKURAI, Hiroto, Tokyo 146-8555 (JP); NAKAO, Haruki, Tokyo 146-8555 (JP)
(74) Representative: Wagner, Karl H.
(86) International application number: PCT/JP2006/321109
(87) International publication number: WO 2007/049583

(57) **Abstract**

A high-efficiency magnetic reciprocating fluid device is provided. Magnetic pole members 10 and 12 having respective induction coils 16 and 18 fitted thereon are opposed to each other at the opposite sides of a magnetic armature 56 connected to one end of a piston that reciprocates in a cylinder. The magnetic armature 56 has an outer peripheral surface comprising arcuate side surfaces 56a designed to face mutually opposing surfaces 10a and 12a of the magnetic pole members 10 and 12 and plane surfaces 56b extending between the side surfaces 56a. Provision of the plane surfaces 56b makes it possible to increase the spacing between the side surfaces 56a, which face the magnetic pole members, without increasing the weight of the armature in comparison to a circular columnar magnetic armature and hence possible to increase the spacing between the magnetic pole members. Accordingly, induction coils reduced in copper loss by increasing the amount of copper used therefor can be fitted onto the magnetic pole members.

## Description

### Technical Field:

The present invention relates to magnetic reciprocating fluid devices, e.g. pumps and compressors, in which a magnetic armature connected at one end thereof to a piston is disposed between a pair of magnetic poles wound with induction coils to reciprocate the piston by a magnetic attraction force generated between the magnetic poles to attract the magnetic armature by intermittently exciting the induction coils and an urging force applied by a spring member to the magnetic armature in a direction opposite to the magnetic attraction force.

### Background Art:

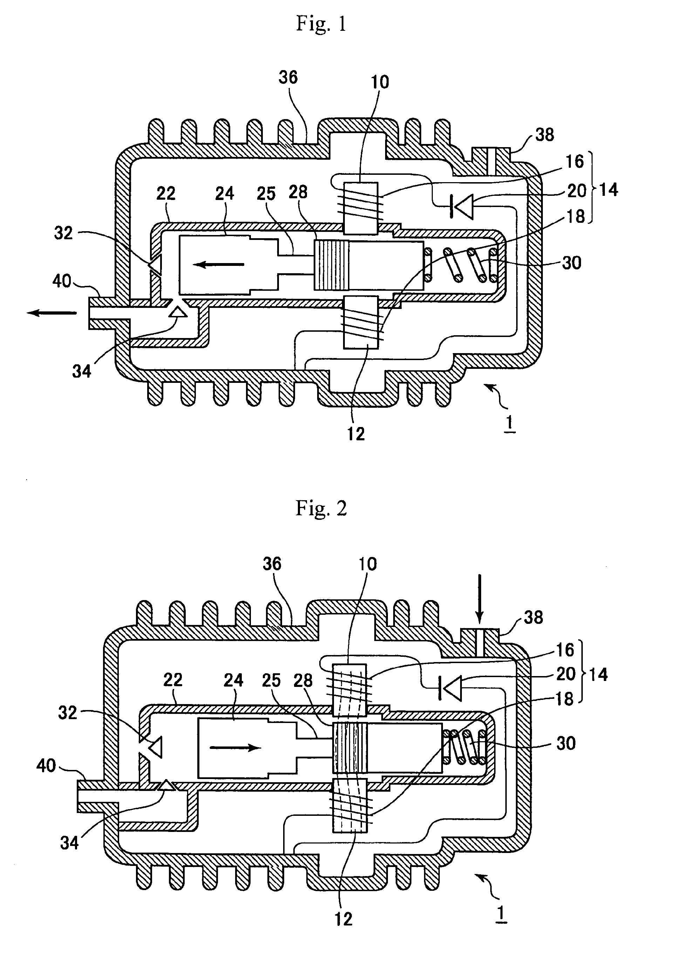

Figs. 1 and 2 schematically show the arrangement of a magnetic reciprocating fluid device used as a pump or a compressor. Fig. 1 shows the magnetic reciprocating fluid device in its initial position. Fig. 2 shows a state where the piston has moved from the initial position.

The magnetic reciprocating fluid device 1 includes an exciting circuit 14 having induction coils 16 and 18 wound around opposed magnetic pole members 10 and 12, respectively, and a half-wave rectifier 20 using a diode or the like. The device 1 further includes a piston 24 slidably fitted in a cylinder 22. A magnetic armature 28 is secured to the piston 24 through a shaft 25. A coil spring 30 urges the piston 24 leftward as viewed in Figs. 1 and 2. Further, the device 1 has a housing 36 accommodating the above-described constituent members.

When a high level of voltage is applied to the exciting circuit 14 in a state where the magnetic reciprocating fluid device 1 is in the position shown in Fig. 1, a magnetic force is generated between the magnetic pole members 10 and 12. As a result, the magnetic armature 28 is magnetically attracted rightward as shown in Fig. 2, whereby the piston 24 is driven rightward. When the voltage application to the exciting circuit 14 changes from the high level to a low level, the induction coils 16 and 18 are demagnetized (deenergized).. Consequently, the piston 24 is driven leftward by the urging force of the coil spring 30. In this way, the piston 24 is driven to reciprocate by intermittently exciting the exciting circuit 14.

The cylinder 22 is provided with a pair of check valves 32 and 34. The reciprocating motion of the piston 24 causes the check valves 32 and 34 to open or close alternately, thereby allowing a fluid to flow in through a fluid inlet 38 formed in the housing 36 and to flow out through a fluid outlet 40 formed in the housing 36. This type of magnetic reciprocating fluid device is disclosed, for example, in Japanese Patent Post-Exam Publication No. Sho 57-30984

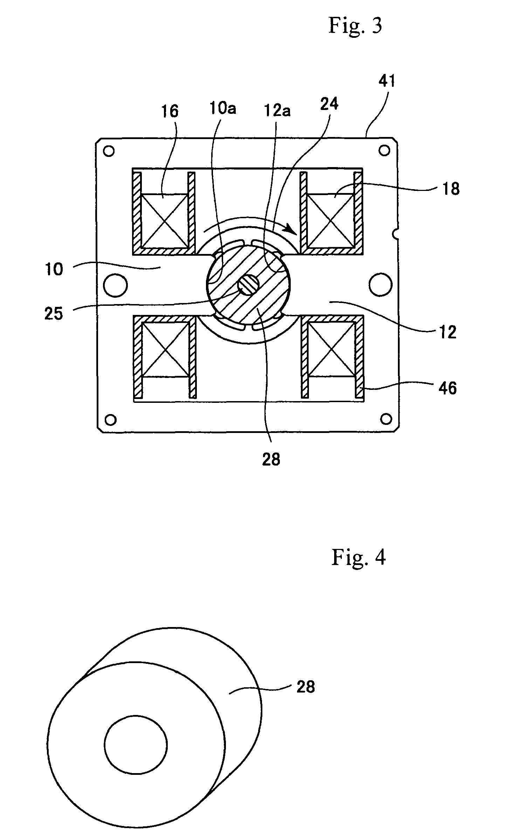

Fig. 3 is a sectional view showing the arrangement of the magnetic armature and the magnetic pole members in the above-described magnetic reciprocating fluid device. The magnetic pole members 10 and 12 are formed from mutually opposing left and right projecting inner side wall portions of a substantially quadrangular magnetic circuit member 41 made of a magnetic material. The induction coils 16 and 18, which are preformed by winding copper wire around respective bobbins (spools) 46, are fitted on the magnetic pole members 10 and 12, respectively. Mutually opposing surfaces 10a and 12a of the magnetic pole members 10 and 12 are arcuate surfaces along a circle centered around an axis perpendicularly intersecting the mutual axis of the magnetic pole members 10 and 12 at the center therebetween (or centered around the longitudinal axis of the piston). The magnetic armature 28 is formed in a circular columnar shape centered around the above-described axis as shown in Fig. 4 in conformity to the shape of the surfaces 10a and 12a.

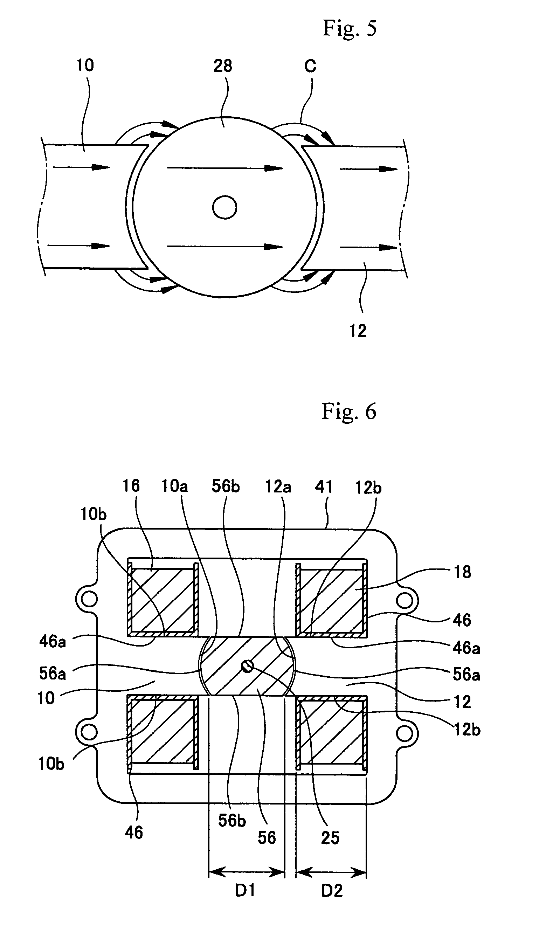

The reason why the magnetic armature is formed in such a circular columnar shape is, as shown in Fig. 5, to allow leakage magnetic flux C generated between the magnetic pole members 10 and 12 and the magnetic armature 28 to converge in the magnetic armature 28 as much as possible.

### Disclosure of the Invention:

### Problem to be Solved by the Invention:

Users demand that magnetic reciprocating fluid devices be reduced in power consumption, size, weight, etc. from the viewpoint of ecology and so forth.
In view of the demand, the inventors of this application conducted studies and, as a result, found that the greater part of the energy loss in a magnetic reciprocating fluid device is copper loss [=I²Rt, where: I is an electric current (A) flowing through the coil wire of the induction coils 16 and 18; R is a resistance (Ω) of the coil wire; and t is a period of time (s) that the current I flows].

On the basis of the above-described finding, the present invention aims at providing a magnetic reciprocating fluid device improved to exhibit a high efficiency by reducing the copper loss.
To reduce the copper loss while maintaining the same output of the magnetic reciprocating fluid device, it is essential to select an optimal wire diameter for a current value to obtain an optimal current density and to increase the amount of copper used for coils. An increase in the amount of copper used for coils results in a corresponding increase in the size of the coils. Meanwhile, there is a limitation on the height relative to the width of the coils wound around bobbins for reasons of production. More specifically, the coils are preformed by winding coil wire around respective bobbins. The preformed coils are each transferred to between opposed magnetic pole members, and the hole of the bobbin of each coil is aligned with the associated magnetic pole member. Thereafter, the coil is moved toward the magnetic pole member so as to fit the hole of the bobbin onto the magnetic pole member, thereby setting the coil in position. Accordingly, it is necessary to increase the spacing between the magnetic pole members in order to transfer each coil having an increased width to between the pole members. If the spacing between the magnetic pole members is increased, it becomes necessary to increase the diameter of the armature in order to avoid an increase in the gap between the armature and each magnetic pole member to reduce the magnetic flux leakage between the armature and the magnetic pole members. If the diameter of the armature is increased, the weight of the armature increases, making it difficult to obtain a resonance balance. As a result, the efficiency of the magnetic reciprocating fluid device is degraded.
An object of the present invention is to solve the above-described problems and to provide a high-efficiency magnetic reciprocating fluid device.

### Means for Solving the Problem:

That is, a magnetic reciprocating fluid device according to the present invention includes a cylinder (denoted by reference numeral 22 in embodiments described below), a piston (24) that reciprocates in the cylinder, an armature (56) connected to one end of the piston, a pair of magnetic pole members (10 and 12) opposed to and spaced from each other in a direction perpendicular to the longitudinal axis (25) of the piston, induction coils (16 and 18) respectively fitted around the magnetic pole members, the induction coils being designed, when excited, to generate a magnetic force between the magnetic pole members, thereby attracting the armature to between the magnetic pole members, and a spring member (30) that applies an urging force to the armature, which is attracted by the magnetic force, in a direction opposite to a direction in which the armature is attracted. The armature (56) and the piston (24) are reciprocated along the longitudinal axis by intermittently exciting the induction coils (16 and 18). In the magnetic reciprocating fluid device, the magnetic pole members respectively have mutually opposing circular arc-shaped surfaces (10a and 12a) each having the shape of a circular arc centered around the longitudinal axis. The armature has an outer peripheral surface comprising a pair of arcuate surfaces (56a) that face the circular arc-shaped surfaces (10a and 12a) when the armature is attracted to between the magnetic pole members. The outer peripheral surface further comprises a pair of plane surfaces (56b) extending parallel to the longitudinal axis between the arcuate surfaces in a direction in which the magnetic pole members face each other.

Specifically, the pair of plane surfaces (56b) may be aligned with on imaginary lines connecting the mutually corresponding ends of the mutually opposing circular arc-shaped surfaces (10a and 12a) of the magnetic pole members, respectively

The plane surfaces (56b) may be located inner than the above-described imaginary lines connecting the mutually corresponding ends of the circular arc-shaped surfaces, and the arcuate surfaces (56a) of the armature may extend outward beyond the imaginary lines.
The arrangement may also be such that the arcuate surfaces (56a) of the armature extend outward beyond the above-described imaginary lines, and the plane surfaces are located outer than the imaginary lines.

Further, the magnetic reciprocating fluid device may be arranged as follows. A shaft (25) that connects the piston to the armature extends along the center axis of the armature. The plane surfaces of the armature each have a bulged portion (56c) at a central position between the magnetic pole members. The bulged portion projects in a direction perpendicular to and away from the longitudinal axis.

### Advantageous Effects of the Invention:

According to the magnetic reciprocating fluid device of the present invention, the amount of copper used for coils can be increased to reduce the copper loss while maintaining the same output. At the same time, an increase in weight of the armature can be suppressed. Thus, it is possible to provide a magnetic reciprocating fluid device improved in efficiency as a whole.

### Brief Description of the Drawings:

[Fig. 1] is a sectional view schematically showing the arrangement of a magnetic reciprocating fluid device.
[Fig. 2] is a sectional view of the magnetic reciprocating fluid device in Fig. 1, showing a state where a piston has moved from an initial position.
[Fig. 3] is a sectional view showing the arrangement of a magnetic armature and magnetic pole members in the magnetic reciprocating fluid device shown in Fig. 1.
[Fig. 4] is a perspective view of the magnetic armature shown in Fig. 3.
[Fig. 5] is a schematic view illustrating the formation of magnetic flux between the magnetic pole members and the magnetic armature in the conventional magnetic reciprocating fluid device.
[Fig. 6] is a sectional view showing the arrangement of a magnetic armature and magnetic pole members in a magnetic reciprocating fluid device according to an embodiment of the present invention.
[Fig. 7] is a perspective view of the magnetic armature shown in Fig. 6.
[Fig. 8] is a schematic view showing another embodiment concerning the armature 56.
[Fig. 9] is a schematic view showing still another embodiment concerning the armature 56.
[Fig. 10] is a schematic view showing a further embodiment concerning the armature 56. Explanation of Reference Numerals:

1: magnetic reciprocating fluid device
10, 12: magnetic pole members
10a, 12a: mutually opposing surfaces of magnetic pole members
16, 18: induction coils
22: cylinder
24: piston
30: coil spring (spring member)
41: magnetic circuit member
46: bobbin
46a: hole
56: magnetic armature
56a: arcuate surface
56b: plane surface
Best Mode for Carrying Out the Invention:

Embodiments of the magnetic reciprocating fluid device according to the present invention will be explained below.
Basically, a magnetic reciprocating fluid device according to an embodiment of the present invention has a basic overall structure similar to that which has been explained above by using Figs. 1 and 2. That is, the magnetic reciprocating fluid device has a cylinder 22, a piston 24 reciprocating in the cylinder 22, an armature 28 connected to one end of the piston 24 through a shaft (screw shank) 25, a pair of magnetic pole members 10 and 12 opposed to and spaced from each other in a direction perpendicular to the longitudinal axis of the piston 24, and induction coils 16 and 18 fitted around the magnetic pole members 10 and 12, respectively. When exited, the induction coils 16 and 18 generate a magnetic force between the magnetic pole members 10 and 12 to attract the armature 28 to between the magnetic pole members 10 and 12. The magnetic reciprocating fluid device further has a coil spring 30 that applies an urging force to the armature 28, which is attracted by the magnetic force, in a direction opposite to the attracting direction. With this arrangement, the armature 28 and the piston 24 are driven to reciprocate along the longitudinal axis by intermittently exciting the induction coils 16 and 18.

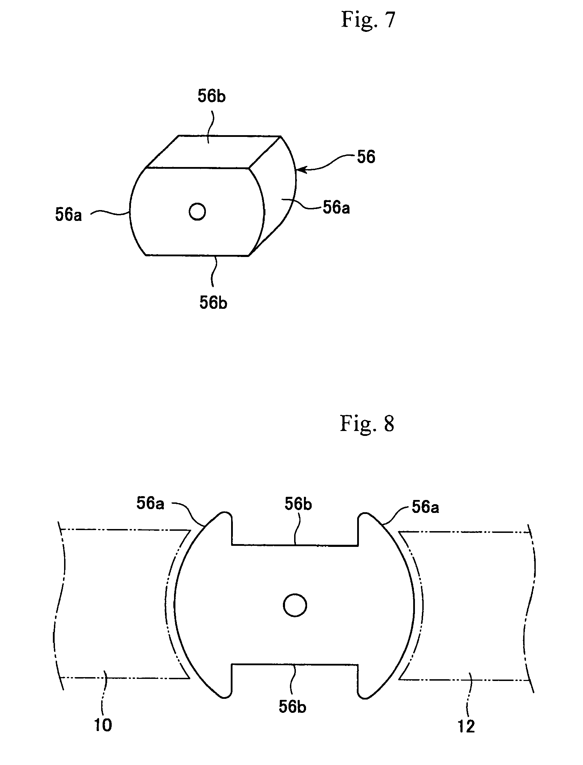

Fig. 6 is a sectional view showing the arrangement of a magnetic armature and magnetic pole members of the magnetic reciprocating fluid device according to the embodiment of the present invention. Fig. 7 is a perspective view of the magnetic armature shown in Fig. 6.

As shown in Fig. 6, the magnetic armature and the magnetic pole members of the magnetic reciprocating fluid device according to the embodiment of the present invention are arranged in substantially the same way as those of the conventional device explained above by using Fig. 3. That is, induction coils 16 and 18, which have been preformed by being wound around respective bobbins (spools) 46, are fitted around magnetic pole members 10 and 12 formed from mutually opposing left and right projecting inner side wall portions of a substantially quadrangular magnetic circuit member 41 made of a magnetic material, and a magnetic armature 56 is disposed so as to be attracted to between the magnetic pole members 10 and 12.

To fit the induction coils 16 and 18 onto the magnetic pole members 10 and 12, respectively, the following operation is needed: The induction coils 16 and 18 are each transferred to between the magnetic pole members 10 and 12, and the hole 46a of the bobbin 46 of each coil is aligned with the associated magnetic pole member 10 or 12. Thereafter, the coil is moved toward the magnetic pole member. Therefore, the spacing D1 between the magnetic pole members 10 and 12 is set larger than the width D2 of each bobbin 46.

The feature of the present invention resides in the following. As shown in Figs. 6 and 7, the armature 56 is not formed in a circular columnar shape, unlike the armature 28 of the conventional device. The magnetic armature 56 has a pair of arcuate side surfaces 56a designed to face the mutually opposing arcuate surfaces 10a and 12a of the magnetic pole members 10 and 12 when the magnetic armature 56 is attracted to between the magnetic pole members 10 and 12. The magnetic armature 56 further has a pair of plane surfaces (upper and lower surfaces as viewed in the figures) 56b extending parallel to each other between the side surfaces 56a. More specifically, the plane surfaces 56b are parallel to the longitudinal axis of the piston 24 in the magnetic reciprocating fluid device, as explained in connection with Figs. 1 and 2, and extend in a direction in which the magnetic pole members 10 and 12 face each other. Further, the plane surfaces 56b in the illustrated example lie on the extension lines of side surfaces 10b and 12b of the magnetic pole members 10 and 12 [more precisely, the plane surfaces 56b lie respectively on imaginary lines connecting the ends (i.e. in the illustrated example, the mutually corresponding upper ends and the mutually corresponding lower ends) of the mutually opposing arcuate surfaces 10a and 12a of the magnetic pole members 10 and 12].

That is, in the magnetic reciprocating fluid device of the present invention, the armature is not formed in a circular columnar shape, unlike the armature of the conventional device, but it is formed in the above-described shape. Therefore, an increase in weight of the armature can be suppressed even if the distance between the side surfaces 56a is increased. Accordingly, the magnetic reciprocating fluid device of the present invention is advantageous as follows. If the amount of copper used for induction coils is increased to reduce the above-described copper loss, the size of the induction coils increases. As a result, it becomes necessary to increase the spacing D1 between the mutually opposing surfaces 10a and 12a of the magnetic pole members 10 and 12 in order to allow the enlarged induction coils to be fitted onto the magnetic pole members 10 and 12. In the present invention, even if the spacing D 1 is increased, it is possible to prevent an increase in the gap between the armature and each magnetic pole member because the distance between the side surfaces 56a of the armature can be increased. Thus, it is possible to suppress the magnetic flux leakage and to suppress an increase in weight of the armature. Accordingly, the magnetic reciprocating fluid device can be increased in efficiency.

Fig. 8 shows another embodiment concerning the armature 56.
That is, in this embodiment, the armature has the plane surfaces 56b located closer to the center of the armature than the imaginary lines connecting the side surfaces 10b and 12b of the opposed magnetic pole members 10 and 12. The arcuate side surfaces 56a of the armature extend outward beyond the imaginary lines connecting the side surfaces 10b and 12b of the magnetic pole members 10 and 12. The reason for this is to allow the leakage magnetic flux between the armature 56 and the mutually opposing surfaces 10a and 12a of the magnetic pole members 10 and 12 to converge in the side surfaces 56a and to suppress an increase in overall weight of the armature by enlarging the arcuate side surfaces 56a.

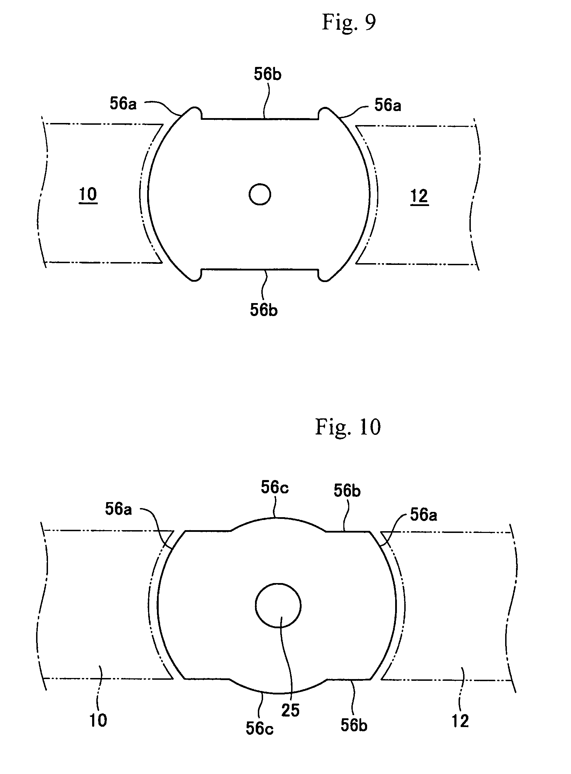

Fig. 9 shows still another embodiment concerning the armature 56 that is similar to the embodiment shown in Fig. 8. In this embodiment, the plane surfaces 56b of the armature are located more outward of the armature than the imaginary lines connecting the side surfaces 10b and 12b of the opposed magnetic pole members 10 and 12. In this case also, it is possible to suppress the magnetic flux leakage and an increase in weight of the armature in the same way as in the armature shown in Fig. 8.

Fig. 10 shows a further embodiment concerning the armature 56.
That is, in this embodiment, the plane surfaces 56b of the armature have bulged portions 56c at the respective central positions between the magnetic pole members 10 and 12. This armature structure aims at making the magnetic reluctance of the magnetic flux path passing through the armature uniform throughout it even in a case where a shaft 25 for connecting the armature 56 to a piston is provided to extend along the center axis of the armature 56.

Although some embodiments of the magnetic reciprocating fluid device according to the present invention have been described above, the present invention is not necessarily limited to the foregoing embodiments. For example, the plane surfaces 56b of the armature are only required to allow the distance between the side surfaces 56a to be increased while suppressing an increase in weight of the armature. Therefore, the plane surfaces 56b may be somewhat arcuate surfaces. Accordingly, the term "plane surfaces" as used in this specification means to include such arcuate surfaces.

## Claims

1. A magnetic reciprocating fluid device comprising:
a cylinder;
a piston that reciprocates in the cylinder;
an armature connected to one end of the piston;
a pair of magnetic pole members opposed to and spaced from each other in a direction perpendicular to a longitudinal axis of the piston;
induction coils fitted around the magnetic pole members, respectively, the induction coils being designed, when excited, to generate a magnetic force between the magnetic pole members, thereby attracting the armature to between the magnetic pole members; and
a spring member that applies an urging force to the armature, which is attracted by the magnetic force, in a direction opposite to a direction in which the armature is attracted;
wherein the armature and the piston are reciprocated along the longitudinal axis by intermittently exciting the induction coils;
the magnetic pole members respectively having mutually opposing circular arc-shaped surfaces each having a shape of a circular arc centered around the longitudinal axis; and
the armature having an outer peripheral surface comprising a pair of arcuate surfaces that face the circular arc-shaped surfaces when the armature is attracted to between the magnetic pole members, the outer peripheral surface further comprising a pair of plane surfaces extending parallel to the longitudinal axis between the arcuate surfaces in a direction in which the magnetic pole members face each other.

2. The magnetic reciprocating fluid device of claim 1, wherein the plane surfaces are aligned with imaginary lines connecting mutually corresponding ends of the mutually opposing circular arc-shaped surfaces of the magnetic pole members, respectively.

3. The magnetic reciprocating fluid device of claim 1, wherein the plane surfaces are located inner than imaginary lines connecting mutually corresponding ends of the mutually opposing circular arc-shaped surfaces of the magnetic pole members, and the arcuate surfaces of the armature extend outward beyond the imaginary lines.

4. The magnetic reciprocating fluid device of claim 1, wherein the arcuate surfaces of the armature extend outward beyond imaginary lines connecting mutually corresponding ends of the mutually opposing circular arc-shaped surfaces of the magnetic pole members, and the plane surfaces are located outer than the imaginary lines.

5. The magnetic reciprocating fluid device of claim 1, further comprising:
a shaft that connects the piston to the armature, the shaft extending along a center axis of the armature;
wherein the plane surfaces of the armature each have a bulged portion at a central position between the magnetic pole members, the bulged portion projecting in a direction perpendicular to and away from the longitudinal axis.
